Europäisches Patentamt

European Patent Office

Office européen des brevets

(19)

(11) Veröffentlichungsnummer: **0 233 534**
**B1**

(12) **EUROPÄISCHE PATENTSCHRIFT**

(45) Veröffentlichungstag der Patentschrift: **16.01.91**

(51) Int. Cl.$^5$: **C 01 B 17/04**

(21) Anmeldenummer: **87101418.9**

(22) Anmeldetag: **03.02.87**

(54) **Verfahren zur kontinuierlichen Reduktion von schwefeldioxidhaltigen Gasen zu Schwefel und Vorrichtung zur Durchführung des Verfahrens.**

(30) Priorität: **14.02.86 DE 3604750**

(43) Veröffentlichungstag der Anmeldung:
**26.08.87 Patentblatt 87/35**

(45) Bekanntmachung des Hinweises auf die
Patenterteilung:
**16.01.91 Patentblatt 91/03**

(84) Benannte Vertragsstaaten:
**AT BE CH DE ES FR GB IT LI NL SE**

(56) Entgegenhaltungen:
**US-A-2 785 056**
**US-A-3 653 833**

**PATENT ABSTRACTS OF JAPAN, Band 5, Nr. 124 (C-66)796r, 11. August 1981; & JP - A - 56 59604 (ISHIKAWAJIMA HARIMA JUKOGYO K.K.) 23.05.1981**

(73) Patentinhaber: **Steuler-Industriewerke GmbH
Postfach 1448 Georg-Steuler-Strasse 175
D-5410 Höhr-Grenzhausen (DE)**

(72) Erfinder: **Sturm, Werner
Am Köggel 15
D-5431 Bilkheim (DE)**

(74) Vertreter: **Vossius & Partner
Siebertstrasse 4 P.O. Box 86 07 67
D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 233 534 B1

# EP 0 233 534 B1

**Beschreibung**

Die Erfindung betrifft ein Verfahren zur kontinuierlichen Reduktion von schwefeldioxidhaltigen Gasen zu Schwefel und eine Vorrichtung zur Durchführung des Verfahrens.

Bei der Verbrennung schwefelhaltiger Brennstoffe, wie Kohle oder Heizöl, in Kraftwerken entstehen schwefeldioxidhaltige Abgase, die sogenannten Rauchgase. Die $SO_2$-Konzentrationen in den Rauchgasen sind relativ niedrig, bei Einsatz von Kohle mit 1% Schwefelgehalt z.B. etwa 700 ppm $SO_2$. Die absolut emittierte $SO_2$-Menge ist jedoch wegen der großen installierten Kraftwerksleistung sehr hoch. Bei einem 600-MW-Kraftwerk auf der Basis von Kohle mit 1% Schwefelgehalt werden z.B. $2 \cdot 10^6$ m$^3$ Rauchgas pro Stunde emittiert, entsprechend einer $SO_2$-Menge von ca. 4 t/Std.

Infolge verschärfter Umweltschutzauflagen wurde in den letzten Jahren eine Vielzahl von Verfahren zur Entschwefelung von Rauchgas entwickelt und in Industrieländern auch angewendet. Bei den meisten Verfahren wird das Schwefeldioxid letztlich zu Calciumsulfat umgewandelt, das teils als Abfallstoff deponiert, teils in der Baustoffindustrie eingesetzt wird. Dem Einsatz in der Baustoffindustrie sind jedoch Grenzen durch den Bedarf in diesem Bereich gesetzt. Die Deponierung von Calciumsulfat ist mit dem Problem der Umweltverschmutzung verknüpft. Die Härte des Grundwassers im Bereich der Deponie steigt signifikant an. Außerdem wird der Anfall von Calciumsulfat in den nächsten Jahren wegen des Zwanges der Kraftwerke zur Entschwefelung der Abgase noch erheblich erhöht.

Es sind ferner Verfahren zur Reduktion von schwefeldioxidhaltigen Gasen zu Schwefel mit Hilfe von Koks (Gasgenerator-Verfahren) oder von Gasen, die Wasserstoff, Kohlenmonoxid, Methan und andere Kohlenwasserstoffe enthalten, bekannt; vgl. Ullmanns Enzyklopädie der technischen Chemie, 4. Auflage, Bd. 21, 1982, S. 24. Ein spezielles Verfahren dieser Art ist die $SO_2$-Reduktion in einer modifizierten Claus-Anlage. Dieses Verfahren kommt hauptsächlich für die Rauchgas-Reinigung bei $SO_2$-Mengen oberhalb etwa 5 t/Std. in Frage. Das Verfahren hat den Nachteil der hohen Investitionskosten für die Anlagen, die schwierige Handhabung des Verfahrens zur Reduktion von $SO_2$, und es ist kaum anwendbar bei kleineren Rauchgasmengen.

Aus JP—A—56 59604 ist ein Verfahren zur Reduktion von schwefeldioxidhaltigen Gasen zu Schwefel mit Hilfe von Kohle bekannt, bei dem die Reduktion in zwei Reaktionsstufen bei unterschiedlichen Temperaturen durchgeführt werden soll. Dabei werden das schwefeldioxidhaltige Gas und die Kohle zunächst einer ersten Reaktionsstufe zugeführt, bei der sie bei einer Temperatur von 650 bis 950°C im Gegenstrom miteinander in Kontakt gebracht werden, wobei ein Schwefel, $H_2S$ und Carbonylsulfid enthaltendes Gas erzeugt wird. Nach Entfernung des Schwefels wird das schwefelfreie, $H_2S$ und Carbonylsulfid enthaltende Gas erneut mit schwefeldioxodhaltigem Gas gemischt und einer zweiten Reaktionsstufe zugeführt, in der $H_2S$ und Carbonylsulfid durch Reaktion mit Schwefeldioxid bei 400 bis 600°C in Gegenwart von Kohle als Katalysator in Schwefel umgesetzt werden.

Der Erfindung liegt die Aufgabe zugrunde, ein kontinuierliches Verfahren zur Reduktion von schwefeldioxidhaltigen Gasen zu Schwefel zu entwickeln, bei dem $SO_2$-Mengen bis zu 5 t/Std. wirtschaftlich in Schwefel überführt werden können. Eine weitere Aufgabe ist es, eine Vorrichtung zur Durchführung des Verfahrens zu schaffen, die relativ klein ist, geringe Investitionen und Betriebskosten erfordert, einfach in der Handhabung und wenig störanfällig ist.

Diese Aufgabe wird durch das Verfahren bzw die Vorrichtung gemäß der Patentansprüche gelost.

Die Lösung der Aufgabe beruht auf folgendem überraschenden Befund. Im wesentlichen sauerstofffreie schwefeldioxidhaltige Gase, z.B. Abgase einer Stripping-Kolonne, die bei einer physikalischen Reinigung von Rauchgasen eingesetzt wird, werden in einen Kontaktraum bzw. einen Reaktor eingeleitet, der mit zur Reduktion von Schwefeldioxid zu Schwefel geeigneter Kohle bzw. Kohlenstoff gefüllt ist. Es wurde gefunden, daß man eine praktisch vollständige, d.h. mehr als 90%ige Reduktion von Schwefeldioxid zu Schwefel erhält, wenn man diesen Kontaktraum in mehrere Temperaturzonen mit in Strömungsrichtung kontinuierlich ansteigender Temperatur, beginnend bei etwa 150°C und endend bei etwa 1100°C, unterteilt. Durch diese Maßnahme wird gleichzeitig eine unerwünschte Abscheidung von Schwefel im Kontaktraum vermieden. Im Gegensatz zu dem bekannten Dreistufen-Verfahren zur Reduktion von Schwefeldioxid zu Schwefel in er Gasphase wird der Temperaturgradient im Kontaktraum ansteigend gehalten, d.h. auf der Einlaßseite der schwefeldioxidhaltigen Gase herrscht eine niedrige Temperatur von etwa 150 bis 200°C, während auf der Ausgangsseite eine Temperatur von etwa 900 bis 1100°C aufrechterhalten wird.

Die Erfindung betrifft somit ein Verfahren zur kontinuierlichen Reduktion von schwefeldioxidhaltigen Gasen, die im wesentlichen frei von molekularem Sauerstoff sind, mit Kohle oder Kohlenstoff, das dadurch gekennzeichnet ist, daß man die schwefeldioxidhaltigen Gase in einen in mehrere Temperaturzonen mit in Strömungsrichtung kontinuierlich ansteigender Temperatur unterteilten und mit Kohle oder Kohlenstoff gefüllten Reaktor einleitet, wobei in der Einleitzungszone der schwefeldioxidhaltigen Gase eine Temperatur von etwa 150 bis 200°C, in mindestens einer mittleren Zone eine Temperatur von 300 bis 700°C und in der Ausgangszone eine Temperatur von etwa 900 bis 1100°C herrscht, und aus den freien Schwefel enthaltenden Abgasen den Schwefel in an sich bekannter Weise abtrennt.

Vorzugsweise führt man die Reduktion in einem Reaktor mit vier Temperaturzonen durch, wobei die erste Zone bei Temperaturen von 150 bis 200°C, die zweite Zone bei Temperaturen von 300 bis 400°C, die dritte Zone bei Temperaturen von 550 bis 700°C und die vierte Zone bei Temperaturen von 900 bis 1100°C

2

EP 0 233 534 B1

gehalten wird. Besonders bevorzugt wird der Reaktor in der ersten Zone bei einer Temperatur von 170 bsi 180°C, in der zweiten Zone bei einer Temperatur von 330 bis 370°C, in der dritten Zone bei einer Temperatur von 620 bis 680°C und in der vierten Zone bei einer Temperatur von 950 bis 1050°C gehalten.

Mit der erfindungsgemäßen Vorrichtung kann der Reaktor in mehrere Temperaturzonen mit in Strömungsrichtung der schwefeldioxidhaltigen Gase kontinuierlich ansteigender Temperatur unterteil werden, wobei in der Einleitungszone der schwefeldioxidhaltigen Gase eine Temperatur von 150 bis 200°C, in mindestens einer mittleren Zone eine Temperatur von 300 bis 700° und in der Ausgangszone der schwefelhaltigen Gase eine Temperatur von 900 bsi 1100°C herrscht.

Die im Reaktor angeordnete Austrittsleitung für die aus der Ausgangzone austretenden schwefelhaltigen Gase führt die schwefelhaltigen Gase von der Ausgangzone, in der eine Temperatur von 900 bis 1100°C herrscht, aus dem Reaktor heraus. Die Austrittsleitung ist vorzugsweise im Zentrum des Reaktors angeordnet.

Vorzugsweise umfaßt die Vorrichtung ferner noch eine Kohle-Zudosierung im oberen Teil oder Kopfteil des Reaktors und einen Ascheaustrag im Bodenteil des Reaktors. Vorzugsweise liegt zur Erhitzung der Wärmeaustauscherflächen in den einzelnen Zonen des Reaktors jeweils eine Brennereinheit vor.

Nach dem Austritt der schwefelhaltigen Gase aus dem Reaktor durch die Austrittsleitung wird der Schwefel aus den reduziergen Abgasen in an sich bekannter Weise auskondensiert.

Der Kontaktraum bzw. der Reaktor, in welchem die Reduktion von $SO_2$ zu Schwefel mittels Kohle oder Kohlenstoff nach dem Verfahren der Erfindung durchgeführt wird, kann, im allgemeinen von zylindrischer Bauart sein. Entsprechend der Menge der in der Zeiteinheit zu behandelnden schwefeldioxidhaltigen Gase kann dieser Reaktor eine Höhe von etwa 1 bis 10 m und einen Durchmesser von etwa 50 bis 2000 mm haben. Der Reaktor kann jedoch auch von quadratischem oder rechteckigem Querschnitt sein.

Der Reaktor weist außen eine Hülle aus hitzebeständigem Stahl auf. Er kann zumindest in seiner Hochtemperaturzone mit einem feuerfesten Material, vorzugsweise einem üblichen sauren feuerfesten Baustoff, wie Schamott, Silicaprodukten oder Produkten auf Basis von Aluminiumoxid ausgekleidet sein. Der Reaktor ist mit dem Reduktionsmittel gefüllt, an dem die Reduktion von Schwefeldioxid zu Schwefel abläuft. Die Korngröße der als Reduktionsmittel verwendeten Kohle oder des Kohlenstoffs ist nicht kritisch. Die Korngröße hängt im wesentlichen nur vom Innendurchmesser des Reaktors ab. Das bei der Reduktion verbrauchte Reduktionsmittel kann kontinuierlich oder diskontinuierlich durch Zugabe von Kohle oder Kohlenstoff in den Kopf des Reaktors ergänzt werden. Verbrauchtes Reduktionsmittel, d.h. Achse, wird vom Bodenteil des Reaktors kontinuierlich oder diskontinuierlich abgezogen.

Zur Temperatursteuerung im Reaktor sind außerhalb, d.h. im Mantelteil, und im Reaktor, d.h. im Bett des Reduktionsmittels, Wärmeaustauscherflächen bzw. Hiezflächen angeordnet. Vorzugsweise haben diese im Bereich des Bettes des Reduktionsmittels eine plattenförmige Gestalt. Sie bestehen vorzugsweise aus hitzebeständigem Stahl. Die Erwärmung dieser Wärmeaustauscherflächen erfolgt, indirekt mittels heißer Gase, die z.B. durch Verbrennung von Heizgas oder Heizöl auf Temperaturen von mindestens 1100°C erhitzt worden sind. Die Erwärmung erfolgt von der Ausgangsseite der schwefelhaltigen reduzierten Gase zur Eingangsseite der schwefeldioxidhaltigen Gase im Gegenstrom zu den zu reduzierenden schwefeldioxidhaltigen Gasen. Bei kleinen Reaktoren ist auch eine elektrische Beheizung der Wärmeaustauscherflächen des Reaktors möglich.

Die Erwärmung der Wärmeaustauscherflächen in den einzelnen Zonen des Reaktors erfolgt vorzugsweise mit jeweils einer Brennereinheit.

Die Menge an zur Reduktion einzusetzenden schwefeldioxidhaltigen Gasen kann schwanken in Abhängigkeit von der Art des Brennstoffs und der gefahrenen Kassellast, d.h. dem Nutzungsgrad des Kraftwerks. Die erfindungsgemäße Vorrichtung kann von sehr niedrigen Durchsatzmengen an schwefeldioxidhaltigen Gasen bis zur maximal möglichen Belastung betrieben werden.

Ein Beispiel einer erfindungsgemäßen Vorrichtung wird in den Zeichnungen noch näher erläutert.

Fig. 1 zeigt schematisch die Gesamtvorrichtung, in der schwefeldioxidhaltige Gase, die im wesentlichen frei von molekularen Sauerstoff sind, zu Schwefel reduziert werden. Der gebildete Schwefeldampf wird in üblicher Weise nach dem Austritt der Gase aus dem Reaktor auskondensiert und abgetrennt.

Fig. 2 und 3 zeigen schematisch den Aufbau des Reaktors in der Seitenansicht und Draufsicht.

Fig. 4 zeigt eine Ausführungsform mit elektrischer Beheizung des Reaktors.

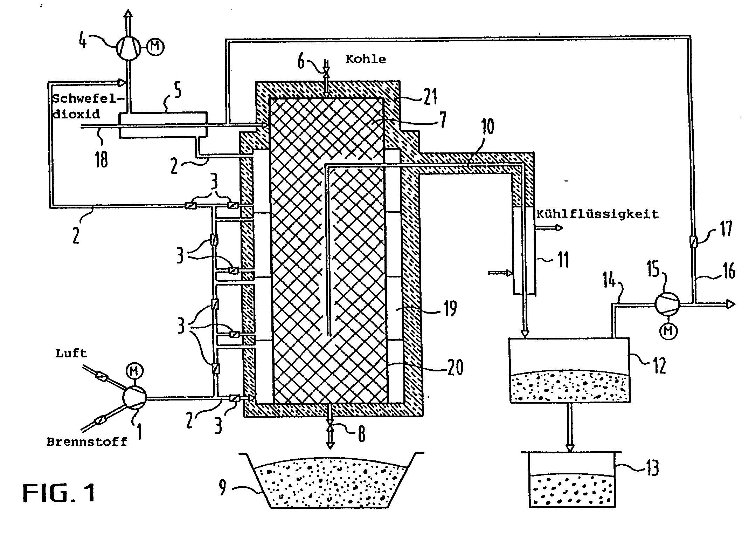

In Fig. 1 bedeuten 1 die Brenneranlage zur Erzeugung von Heißgasen, 2 Heißgas-Versorgungs leitungen mit Verteilern, 3 Einrichtungen zur Steuerung der Reaktortemperaturen in den verschiedenen Temperaturzonen, 4 ein Gebläse zur Förderung der Heißgase, 5 einen Wärmeaustauscher zur Erwärmung der schwefeldioxidhaltigen Gasbeschickung, 6 eine Kohle-Zudosierung, 7 den Reaktor mit Kohlefüllung, 8 einen Ascheaustrag, 9 einen Aschebehälter, 10 eine Austrittleitung für die schwefelhaltigen reduzierten Gase, 11 einen Kühler zur Auskondensation des Schwefels aus dem Abgas, 12 eine Einrichtung zur Schwefelabtrennung, 13 einen Schwefelbehälter, 14 eine Austrittsleitung für die umgesetzten, noch geringe Mengen Schwefel enthaltenden Gase, 15 ein Gebläse zur Förderung der schwefeldioxid- bzw. schwefelhaltigen Abgase durch die Vorrichtung, 16 eine Bypassleitung zur teilweisen Rückführen der umgesetzten Gase in den Reaktor, 17 eine Einrichtung zur Steuerung der Bypassmenge, 18 eine Leitung zum Einspeisen von im wesentlichen sauerstofffreien schwefeldioxidhaltigen Gasen in die auf niedrige Temperatur gehaltene Eingangsseite des Reaktors, 19 den äußeren Reaktormantel mit Heißgasen zur Beheizung des Reaktors, 20 die Reaktorwand und 21 eine Wärmeisolation.

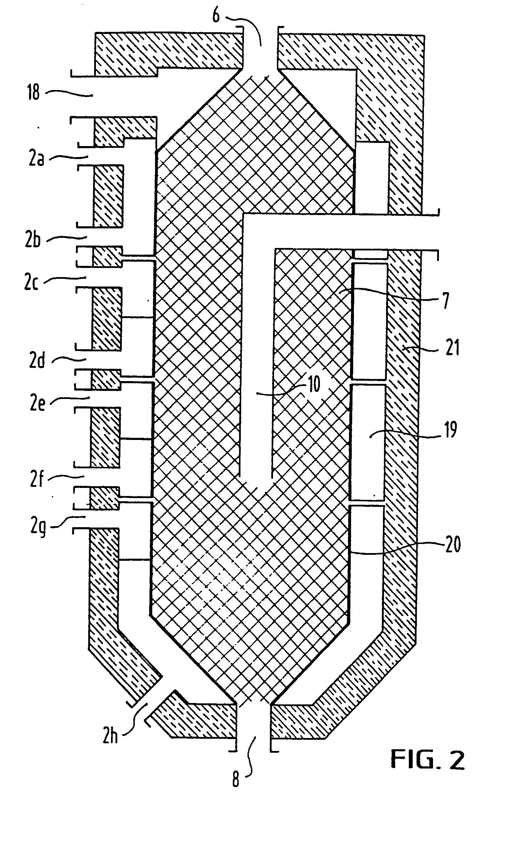

In Fig. 2 bedeuten 2a bis 2h die Heißgasleitungen, die die Verbindung zwischen den Verteilern der Heißgas-Versorgungs leitungen 2 (Fig. 1) und dem Reaktor 7 herstellen, 6 die Kohle-Zudosierung, 7 den Reaktor mit Kohlefüllung, 8 den Ascheaustrag, 10 die Austrittsleitung für die reduzierten schwefelhaltigen Gase, 18 die Leitung für die im wesentlichen sauerstofffreie schwefeldioxidhaltige Gasbeschickung, 19 den äußeren Reaktormantel mit Heißgasen zur Beheizung des Reaktors, 20 die Reaktorwand und 21 die Wärmeisolation.

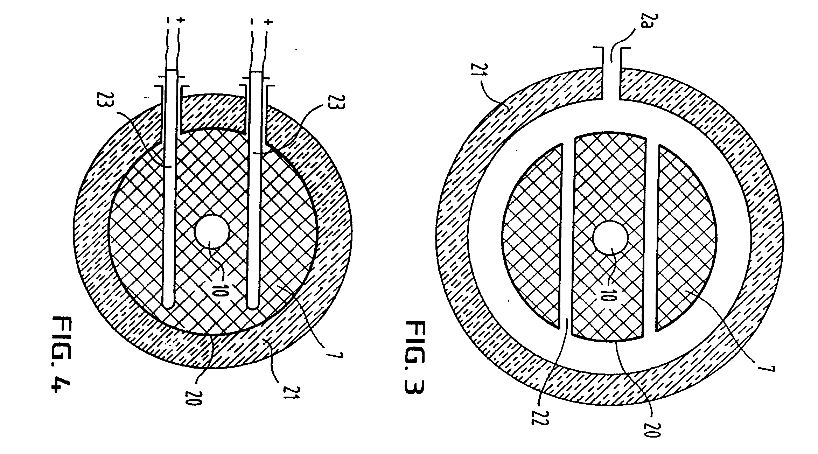

In Fig. 3 bedeuten 2a eine Heißgasleitung, 7 den Reaktor mit Kohlefüllung, 10 die Austrittsleitung für die reduzierten schwefelhaltigen Gase, 20 die Reaktorwand, 21 die Wärmeisolation und 22 einen inneren Wärmeaustauscherbereich.

In Fig. 4 bedeuten 7 den Reaktor mit Kohlefüllung, 10 die Austrittsleitung für die reduzierten schwefelhaltigen Gase, 20 die Reaktorwand, 21 die Wärmeisolation und 23 elektrische Heizelemente.

Das erfindungsgemäße Verfahren wird im einzelnen und anhand der Fig. 1 noch näher erläutert.

Im Verfahren der Erfindung werden die im wesentlichen sauerstofffreien schwefeldioxidhaltigen Gase über die Rauchgasleitung 18 dem Wärmeaustauscher 5 zugeführt. Im Wärmeaustauscher 5 werden die schwefeldioxidhaltigen Gase durch indirekte Erwärmung mit den Heißgasen auf etwa 150 bis 200°C vorerhitzt. Danach gelangen die erwärmten schwefeldioxidhaltigen Gase in den oberen Teil des mit Kohle oder Kohlenstoff gefüllten Reaktors 7. Im Reaktor 7 durchströmen die schwefeldioxidhaltigen Gase die Kohlefüllung von oben nach unten. Als Reduktionsmittel kann Kohlenstoff oder Kohle in Form z.B. von Koks, Steinkohle, Aktivkohle oder Holzkohle verwendet werden. Braunkohle ist als Reduktionsmittel weniger geeignet. Die schwefeldioxidhaltigen Gase werden durch einzelne Temperaturzonen des Reaktors 7 geführt. Die Temperatur nimmt von der Einlaßseite der schwefeldioxidhaltigen Gase im oberen Teil des Reaktors bis zum unteren Teil des Reaktors ziemlich gleichmäßig zu, nämlich von etwa 150 bis 200°C bis auf etwa 900 bis 1100°C. Dabei werden die schwefeldioxidhaltigen Gase bis auf die Endtemperatur von etwa 900 bis 1100°C im unteren Teil des Reaktors erhitzt. In den einzelnen Zonen des Reaktors erfolgt die Reduktion von Schwefeldioxid mit Kohlenstoff zu Schwefel. Bei der Unterteilung des Reaktors 7 in beispielsweise vier Temepraturzonen herrschen in den einzelnen Zonen vorzugsweise folgende Temperaturen (Mittelwerte):

Zone 1: 170 bis 180°C
Zone 2: 330 bis 370°C
Zone 3: 620 bis 680°C und
Zone 4: 950 bis 1050°C.

Bei den Werten handelt es sich um Durchschnittswerte in den jeweiligen Zonen, wobei die Temperatur beim Übergang von einer Zone in die nächst höhere normalerweise nicht sprunghaft, sondern kontinuierlich von der obersten zur untersten Zone ansteigt. Im Übergangsbereich stellt sich also zwischen den einzelnen Zonen eine kontinuierlich verlaufende Übergangstemperatur zwischen den genannten Werten ein.

Nach Passieren der untersten, sehr heißen Temperaturzone, werden die schwefelhaltigen Gase über die Leitung 10 aus dem Reaktor 7 abgeleitet. Die Leitung 10 wird dabei innerhalb des Reaktors von unten nach oben geführt. Dabei geben die heißen schwefelhaltigen Gase einen Großteil der Wärme an die Kohlefüllung der einzelnen Temperaturzonen ab, was zu einer erheblichen Energieeinsparung führt. In Fig. 1 ist eine Leitung 10 gezeigt, die zentral im Reaktor im Bett des Reduktionsmittels angeordnet ist. Selbstverständlich können auch mehrere Gasleitungen 10 im Reaktor angeordnet sein, um die heißen schwefelhaltigen Gase von der untersten Temperaturzone in der in Fig. 1 gezeigten Art aus dem Reaktor abzuführen.

Nach Austritt der schwefelhaltigen Gase über die Leitung 10 aus dem Reaktor 7 gelangen sie in einen Kühler 11 und eine nachgeschaltete Einrichtung 12 zur Schwefelabtrennung, wo der Schwefel in bekannter Weise auskondensiert und abgetrennt wird. Der abgetrennte Schwefel kann anschließend in einen Schwefelsammelbehälter 13 transportiert werden.

Die vom Schwefel im wesentlichen befreiten Gase gelangen von Schwefelabtrennbehälter 12 durch eine Leitung 14 in das nachgeschaltete Gebläse 15. Das Gebläse 15 dient zum Transport der Gase durch die Gesamtanlage. Nach Passieren des Gebläses 15 wird ein Teilstrom der Gase über die Bypassleitung 16 zum Reaktoreintritt bzw. in die Leitung 18 zurückgeführt und dort mit den vorerhitzten schwefeldioxidhaltigen Gasen vermischt. Dies verbessert den Wirkungsgrad der Gesamtvorrichtung.

Die Steuerungen der Teilstrommenge über die Bypassleitung 16 geschieht mit einer Klappe 17. Das nicht über die Bypassleitung 16 zurückgeführte Gas wird einer Absorptionseinrichtung (nicht gezeigt) zur Endreinigung bzw. der Verbrennungsluft, z.B. eines Kessels, zugeführt.

Das durch die Reduktion im Reaktor 7 verbrauchte Reduktionsmittel, z.B. Koks, wird über die Kohle-Zudosierung 6 kontinuierlich oder diskontinuierlich dem Reaktor 7 zugeführt. Die bei der Reduktion im Reaktor 7 anfallende Asche wird über den Ascheaustrag 8 kontinuierlich oder diskontinuierlich aus dem Reaktor 7 ausgetragen und dem Aschebehälter 9 zugeführt. Von dort wird die Asche entnommen.

Die Erwärmung des Reaktors 7 kann bei kleineren Anlagen auch durch elektrische Heizelemente 23

4

erfolgen, die in den einzelnen Temperaturzonen im Bett des Reduktionsmittels angeordnet sind; vgl. Fig. 4. Üblicherweise erfolgt die Erwärmung des Reaktors 7 und der schwefeldioxidhaltigen Gase durch indirekte Beheizung mit Heißgasen. Die Heißgase werden durch Verbrennung eines Brennstoffs, wie Heizgas oder Heizöl, in der Brenneranlage 1 erzeugt und über die Heißgas-Versorgungs leitung 2 dem äußeren Reaktormantel 19 zugeleitet.

Der anßere Reaktormantel 19 ist in Fig. 1 in vier verschiedene Bereiche aufgeteilt, die den Temperaturzonen im Reaktor 7 entsprechen.

Die Erwärmung der Reaktorfüllung und der schwefeldioxidhaltigen Gase erfolgt sowohl über den äußeren Reaktormantel 19 des Reaktors 7 als auch über die inneren Wärmeaustauscherbereiche 22 im Reaktor 7. Dadurch wird eine gleichmäßige Erwärmung über den gesamten Reaktorquerschnitt und eine Verbesserung der Temperatureinstellung in den einzelnen Zonen erreicht.

Die Steuerung der Temperaturzonen im Reaktor 7 erfolgt durch entsprechende Einstellung der Klappen 3. Zur Überwindung des Druckverlustes beim Durchströmen der Heißgase durch die einzelnen Wärmeaustauscherzonen ist in der Heißgas-Versorgungs leitung 2 ein Gebläse 4 installiert.

Um die Abstrahlungsverluste der Anlage so gering wie möglich zu halten, sind die entsprechenden Anlagenteile mit einer Wärmeisolation 21 versehen.

Die Erfindung wird im Beispiel noch näher erläutert. Das Beispiel ist nicht einschränkend aufzufassen.

Beispiel

Die Versuche zur Reduktion von praktisch sauerstofffreien schwefeldioxidhaltigen Gasen mit Kohlenstoff zu Schwefel wurden in einer Pilotapparatur mit folgenden Abemssungen und unter folgenden Bedingungen durchgeführt:

| | | |
|---|---|---|
| Rohr-Innendurchmesser | ca. | 50 mm |
| Rohrlänge | ca. | 800 mm |
| Rohrmaterial | | Edelstahl, 3 mm dick |
| Füllmaterial | | Kohlepellets, 4 mm Körnung |
| Füllmenge | ca. | 1 kg (ca. 1,2 Liter) |
| Füllhöhe | ca. | 600 mm |
| Gasdurchsatz | ca. | 0,8 Nm³/Std. |
| Durchströmungsrichtung | | von oben nach unten |
| Temperatur im Eintritt | ca. | 150—200°C |
| Temperatur im Austritt | ca. | 1100°C |
| Beheizung | | heiße Gase |
| Volumenbelastung | | 100—5000 h⁻¹ |

Die schwefeldioxidhaltigen Gase der nachstehend angegebenen Zusammensetzung wurden von oben in den mit Kohlepellets gefüllten Reaktor eingeleitet und von oben nach unten durch die einzelnen Temperaturzonen geführt.

Die Temperaturen in den einzelnen Zonen waren dabei wie folgt (Mittelwerte)

| | normaler Bereich | bevorzugter Bereich | besonders bevorzugte Werte |
|---|---|---|---|
| 1. Zone | 150— 200°C | 170— 180°C | 175°C |
| 2. Zone | 300— 400°C | 330— 370°C | 350°C |
| 3. Zone | 550— 700°C | 620— 680°C | 650°C |
| 4. Zone | 900—1100°C | 950—1050°C | 980°C |

Nach Passieren des Reaktors wurden die schwefelhaltigen Gase in einer Kühlfalle indirekt mit Wasser abgekühlt. Dabei fiel der gebildete Schwefel zum Großteil aus. Zur vollständigen Auskondensation des Schwefels wurden die Gase noch durch eine mit Wasser gefüllte Waschflasche geleitet. Nach Passieren der Waschflasche wurde ein Teilstrom der Gase zurück zum Reaktoreintritt gefördert.

Während der Versuche wurden folgende Parameter variiert:

| | |
|---|---|
| Schwefeldioxidgehalt | 20—80 Vol.-% |
| Kohlendioxidgehalt | 5—60 Vol.-% |
| Wassergehalt | 0—20 Vol.-% |
| Bypassmenge | 0—80 Vol.-% |

**EP 0 233 534 B1**

Die Kohlepellets durchwanderten dabei den Reaktor von oben nach unten in gleicher Richtung wie die schwefeldioxidhaltigen Gase.

Es wurden bei den Versuchen folgende Ergebnisse erhalten:

Versuch A:

Gaszusammensetzung vor dem Reaktor

30 Vol.-% $SO_2$

60 Vol.-% $CO_2$

10 Vol.-% Wasser

Wirkungsgrad ($SO_2$-Abscheidungsgrad) bezogen auf $SO_2$: ca 94%

Versuch B:

Gaszusammensetzung vor dem Reaktor

70 Vol.-% $SO_2$

20 Vol.-% $CO_2$

10 Vol-% $H_2O$

Wirkungsgrad, bezogen auf $SO_2$: ca 95%

Versuch C:

Gaszusammensetzung vor dem Reaktor

40 Vol-% $SO_2$

40 Vol-% $CO_2$

20 Vol-% $H_2O$

Wirkungsgrad, bezogen auf $SO_2$: 93%

**Patentansprüche**

1. Verfahren zur kontinuierlichen Reduktion von schwefeldioxidhaltigen Gasen, die im wesentlichen frei von molekularem Sauerstoff sind, mit Kohle oder Kohlenstoff, dadurch gekennzeichnet, daß man die schwefeldioxidhaltigen Gase in einen in mehrere Temperaturzonen mit in Strömungsrichtung kontinuierlich ansteigender Temperatur unterteilten und mit Kohle oder Kohlenstoff gefüllten Reaktor einleitet, wobei in der Einleitungszone eine Temperatur von 150 bis 200°C, in mindestens einer mittleren Zone eine Temperatur von 300 bis 700°C und in der ausgangszone eine Temperatur von 900 bis 1100°C herrscht, und aus den reduzierten schwefelhaltigen Abgasen den Schwefel in an sich bekannter Weise abtrennt.

2. Verfahren nach Anspruch 1, dadurch gekennzeichnet, daß man die Reduktion in einem Reaktor mit vier Temperaturzonen durchführt, wobei die erste Zone bei Temperaturen von 150 bis 200°C, die zweite Zone bei Temperaturen von 300 bis 400°C, die dritte Zone bei Temperaturen von 550 bis 700°C und die vierte Zone bei Temperaturen von 900 bis 1100°C gehalten wird.

3. Verfahren nach Anspruch 2, dadurch gekennzeichnet, daß der Reaktor in der ersten Zone bei einer Temperatur von 170 bis 180°C, in der zweiten Zone bei einer Temperatur von 330 bis 370°C, in der dritten Zone bei einer Temperatur von 620 bis 680°C und in der vierten Zone bei einer Temperatur von 950 bis 1050°C gehalten wird.

4. Vorrichtung zur Durchführung des Verfahrens nach einem der Ansprüche 1 bis 3, gekennzeichnet durch folgende Merkmale: ein mit Kohle oder Kohlenstoff als Reduktionsmittel gefüllter Reaktor (7), eine Leitung (18) im oberen Teil des Reaktors (7) zum Einleiten von vorerhitzten, schwefeldioxidhaltigen Gasen, ein in mehrere Wärmeaustauscherzonen unterteilter äußerer Reaktormantel (19) und durch den Reaktor geführte Wärmeaustauscherbereiche (22) zur Beheizung des Reaktors mit Heißgasen, eine Versorgungsleitung (2) für die Heißgase mit Ableitungen zum Ein- und Ausleiten von Gas in die einzelnen Austauscherzonen, wobei die Gasführung von unten nach oben erfolgt, auf der Leitung und den Ableitungen sich befindliche Einrichtungen (3) zur Steuerung des Heißgasstromes in den Wärmeaustauscherzonen des äußeren Reaktormantels, und eine innerhalb des Reaktors von unten nach oben geführte Austrittsleitung (10) für die reduzierten schwefelhaltigen Gase, die den Reaktor (7) in seinem oberen Teil verläßt.

5. Vorrichtung nach Anspruch 4, gekennzeichnet durch eine Kohle-Zudosierung (6) im Kopfteil und einen Ascheaustrag (8) im Bodenteil des Reaktors.

6. Vorrichtung nach Anspruch 4, dadurch gekennzeichnet, daß die Austrittsleitung (10) im Reaktor zentral angeordnet ist.

7. Vorrichtung nach Anspruch 4, dadurch gekennzeichnet, daß zur Erhitzung der Wärmeaustauschertzonen in den einzelnen Zonen des Reaktors (7) jeweils eine Brennereinheit vorgesehen ist.

**Revendications**

1. Procédé de réduction continue par du charbon ou du carbone de gaz à teneur en dioxyde de soufre, qui sont sensiblement exempts d'oxygène moléculaire, caractérisé en ce qu'on introduit les gaz à teneur en dioxide de soufre dans un réacteur qui est divisé en plusieurs zones de température présentant une température croissant de façon continue dans le sens d'écoulement et qui est rempli de charbon ou de

6

# EP 0 233 534 B1

carbone, une température de 150 à 200°C régnant dans la zone d'introduction, une température de 300 à 700°C dans au moins une zone centrale et une température de 900 à 1100°C dans la zone de sortie, et en ce qu'on sépare le soufre, d'une manière connue en soi, des gaz résiduaires réduits contenant du soufre.

2. Procédé suivant la revendication 1, caractérisé en ce qu'on effectue la réduction dans un réacteur à quatre zones de température, la première zone étant maintenue à des températures de 150 à 200°C, la deuxième zone à des températures de 300 à 400°C, la troisième zone à des températures de 550 à 700°C et la quatrième zone à des températures de 900 à 1100°C.

3. Procédé suivant la revendication 2, caractérisé en ce que le réacteur est maintenu dans la première zone à une température de 170 à 180°C, dans la deuxième zone à une température de 330 à 370°C, dans la troisième zone à une température de 620 à 680°C et dans la quatrième zone à une température de 950 à 1050°C.

4. Dispositif pour la mise en oeuvre du procédé suivant l'une quelconque des revendications 1 à 3, caractérisé par les particularités suivantes: un réacteur (7) rempli de charbon ou de carbone en tant qu'agent de réduction, une conduite (18) à la partie supérieure du réacteur (7) pour l'introduction de gaz à teneur en dioxyde de soufre préchauffés, une enveloppe externe de réacteur (19) divisée en plusieurs zones d'échéangeur de chaleur et de zones d'échangeur de chaleur (22) conduites au travers du réacteur pour le chauffage du réacteur par des gaz chauds, une conduite d'alimentation (2) pour les gaz chauds avec des dérivation pour l'introduction et l'extraction de gaz dans les zones l'échangeur individuelles, l'alimentation en gaz étant réalisé en bas en haut, des dispositifs (3), qui sont situés sur la conduite et sur les dérivations, pour la commande de l'écoulement de gaz chaud dans les zones d'échangeur de chaleur de l'enveloppe extérieure de réacteur, et une conduite de sortie (10), guidée de bas en haut à l'intérieur du réacteur, pour les gaz réduits à teneur en soufre qui quittent le réacteur (7) à sa partie supérieure.

5. Dispositif suivant la revendication 4, caractérisé par un élément d'addition dosée de charbon (6) agencé dans la partie de tête et par une évacuation de cendres (8) dans la partie inférieure du réacteur.

6. Dispositif suivant la revendication 4, caractérisé en ce que la conduite de sortie (10) est agencée de façon centrale dans le réacteur.

7. Dispositif suivant la revendication 4, caractérisé en ce qu'une unité de brûleur est chaque fois prévue dans les zones individuelles du réacteur (7) pour le chauffage des zones d'échanteur de chaleur.

**Claims**

1. A method for continuously reducing sulphur dioxide-containing gases, which are essentially free of molecular oxygen, using coal or carbon, characterized in that the sulphur dioxide-containing gases are introduced into a reactor which is divided into several temperature zones with the temperature continuously increasing in the direction of flow and which is filled with coal or carbon, with a temperature of 150 to 200°C in the inlet zone, a temperature of 300 to 700°C in at least one middle zone and a temperature of 900 to 1100°C in the outlet zone, and in that the sulphur is separated from the reduced sulphur-containing waste gases in a manner known per se.

2. The method according to claim 1, characterized in that the reduction is carried out in a reactor having four temperature zones, the first zone being maintained at a temperature of 150 to 200°C, the second zone being maintained at a temperature of 300 to 400°C, the third zone being maintained at a temperature of 550 to 700°C and the fourth zone being maintained at a temperature of 900 to 1100°C.

3. The method according to claim 2, characterized in that the reactor is maintained at a temperature of 170 to 180°C in the first zone, at a temperature of 330 to 370°C in the second zone, at a temperature of 620 to 680°C in the third zone and at a temperature of 950 to 1050°C in the fourth zone.

4. An apparatus for carrying out the method according to any one of the claims 1 to 3, characterized by the following features: a reactor (7) filled with a reducing agent of coal or carbon, a pipe (18) in the upper portion of the reactor (7) for introducing the preheated sulphur dioxide-containing gases, an outer reactor mantle (19) divided into several heat exchanger zones, and heat exchanger areas (22) which are led through the reactor and heat the reactor using hot gases, a supply pipe (2) for the hot gases which has distribution pipes for introducing and removing the gas into and out of the individual exchanger zones, with the gas being led from the bottom to the top, means (3) arranged on the pipe and distribution pipes for controlling the hot gas flow in the heat exchanger zones of the outer reactor mantle, and an outlet pipe (10) led from the bottom to the top of the reactor for the reducing sulphur-containing gases, which pipe leaves the reactor (7) at its upper portion.

5. The apparatus according to claim 4, characterized by a coal-feeding unit (6) in the top portion and an ash outlet (8) in the base of the reactor.

6. The apparatus according to claim 4, characterized in that the outlet pipe (10) is arranged in the centre of the reactor.

7. The apparatus according to claim 4, characterized in that one burner unit each is provided in the individual zones of the reactor (7) for heating the heat exchanger zones.

7

FIG. 1

Schwefel-dioxid

Kohle

Kühlflüssigkeit

Luft

Brennstoff

EP 0 233 534 B1

FIG. 2

EP 0 233 534 B1

FIG. 3

FIG. 4

3